# EUROPEAN PATENT APPLICATION

(11) **EP 4 338 978 A1**
(43) Date of publication of application: **20.03.2024**
(21) Application number: 22807196.5
(22) Date of filing: 23.03.2022
(51) Int. Cl.: B60C 1/00, C08K 9/06, C08L 7/00, C08L 9/06

(54) **RUBBER COMPOSITION FOR TIRE**

(30) Priority: 12.05.2021 JP 2021080928
(71) Applicant: The Yokohama Rubber Co., Ltd., Kanagawa Prefecture, 254-8601 (JP)
(72) Inventor: KAZARIYA Ayaki, Hiratsuka-shi, Kanagawa 254-8601 (JP)
(74) Representative: Dilg, Haeusler, Schindelmann Patentanwaltsgesellschaft mbH
(86) International application number: PCT/JP2022/013455
(87) International publication number: WO 2022/239491

(57) **Abstract**

To provide a rubber composition for a tire by which excellent steering stability and wet performance are achieved and temperature dependency of satisfactory low rolling resistance is reduced. The rubber composition for a tire contains, in 100 parts by mass of a diene rubber containing 55 mass% or more of a terminal-modified styrene-butadiene rubber, from 60 to 130 parts by mass of silica, from 10 to 50 parts by mass of a thermoplastic resin, and from 2 to 20 mass% of a silane coupling agent with respect to the mass of the silica, the terminal-modified styrene-butadiene rubber having a vinyl content of from 9 to 45 mol% and a glass transition temperature of -45°C or lower, and containing a polyorganosiloxane structure or an aminosilane structure at a terminal.

## Description

### Technical Field

The present invention relates to a rubber composition for a tire having excellent steering stability and wet performance and achieving satisfactory low rolling resistance in a wide temperature range.

### Background Art

A summer tire is required to have high levels of steering stability, wet performance, low rolling resistance, and wear resistance. For the rubber composition for a tire which enhances wet performance and low rolling resistance, blending of silica and various resin components in a modified styrene-butadiene rubber has been proposed (e.g., see Patent Documents 1 and 2).

However, in recent years, it has been demanded to make low rolling resistance excellent in a wide temperature range. The inventions described in Patent Documents 1 and 2 above are not necessarily satisfactory to reduce the temperature dependency of the rolling resistance and to achieve the low rolling resistance in a wide temperature range.

### Citation List

### Patent Literature

Patent Document 1: JP 5376008 B
Patent Document 2: JP 6641300 B

### Summary of Invention

### Technical Problem

An object of the present invention is to provide a rubber composition for a tire by which excellent steering stability and wet performance are achieved and temperature dependency of satisfactory low rolling resistance is reduced.

### Solution to Problem

The rubber composition for a tire of an embodiment of the present invention that achieves the object described above is a rubber composition containing, in 100 parts by mass of a diene rubber containing 55 mass% or more of a terminal-modified styrene-butadiene rubber, from 60 to 130 parts by mass of silica, from 10 to 50 parts by mass of a thermoplastic resin, and from 2 to 20 mass% of a silane coupling agent with respect to the mass of the silica, the terminal-modified styrene-butadiene rubber having a vinyl content of from 9 to 45 mol% and a glass transition temperature of -45°C or lower, and containing a polyorganosiloxane structure or an aminosilane structure at a terminal.

### Advantageous Effects of Invention

Because the silica, the thermoplastic resin, and the silane coupling agent are blended in the diene rubber containing the specific terminal-modified styrene-butadiene rubber in the rubber composition for a tire according to an embodiment of the present invention, excellent steering stability and wet performance as well as satisfactory low rolling resistance in a wide temperature range can be achieved.

In the rubber composition for a tire, from 10 to 30 mass% of a natural rubber is preferably contained in 100 mass% of the diene rubber. Furthermore, the thermoplastic resin contains a terpene resin, and a mass ratio of the terpene resin in the thermoplastic resin is preferably 1/3 or more.

Furthermore, the silane coupling agent is preferably represented by an average compositional formula of Formula (1) below.

(A)ₐ(B)_{b}(C)_{c}(D)_{d}(R1)ₑSiO_{(4-2a-b-c-d-e)/2} ... (1)

In Formula (1), A represents a divalent organic group containing a sulfide group, B represents a monovalent hydrocarbon group having from 5 to 10 carbons, C represents a hydrolyzable group, D represents an organic group containing a mercapto group, R1 represents a monovalent hydrocarbon group having from 1 to 4 carbons, and a to e satisfy the relationships: 0 ≤ a < 1, 0 < b < 1, 0 < c < 3, 0 < d < 1, 0 < e < 2, and 0 < 2a + b + c + d + e < 4.

A tire including a tread portion made of the rubber composition for a tire is particularly suitable as a summer tire and has excellent steering stability, wear resistance, and wet performance, and can reduce temperature dependency of satisfactory low rolling resistance.

### Description of Embodiments

The rubber composition for a tire according to an embodiment of the present invention contains 55 mass% or more of a specific terminal-modified styrene-butadiene rubber in 100 mass% of the diene rubber. Blending of the specific terminal-modified styrene-butadiene rubber makes dispersibility of the silica excellent, ensures wear resistance and low rolling resistance, and reduces temperature dependency of satisfactory low rolling resistance. The amount of the terminal-modified styrene-butadiene rubber is 55 mass% or more, preferably from 55 to 80 mass%, and more preferably from 60 to 75 mass%, in 100 mass% of the diene rubber. When the amount of the terminal-modified styrene-butadiene rubber is less than 55 mass%, an effect of enhancing dispersibility of the silica cannot be adequately achieved, and the temperature dependency of low rolling resistance cannot be reduced.

The terminal-modified styrene-butadiene rubber contains a polyorganosiloxane structure or an aminosilane structure at a terminal. When the polyorganosiloxane structure or the aminosilane structure is contained, good dispersibility of the silica is achieved, and excellent wet performance and low rolling resistance can be achieved.

The polyorganosiloxane structure is preferably a structure derived from polyorganosiloxane represented by Formula (2) below. In Formula (2) below, R₁ to R₈ are alkyl groups having from 1 to 6 carbons or aryl groups having from 6 to 12 carbons and may be the same or different from each other. X₁ and X₄ are groups selected from the group consisting of alkyl groups having from 1 to 6 carbons, aryl groups having 6 to 12 carbons, alkoxy groups having 1 to 5 carbons, and epoxy group-containing groups having from 4 to 12 carbons and may be the same or different from each other. X₂ is an alkoxy group having from 1 to 5 carbons or an epoxy group-containing group having from 4 to 12 carbons, and the plurality of X₂ groups may be the same or different from each other. X₃ is a group containing 2 to 20 alkylene glycol repeating units, and, when there are a plurality of X₃ groups, they may be the same or different from each other. m is an integer from 3 to 200, n is an integer from 0 to 200, and k is an integer from 0 to 200.

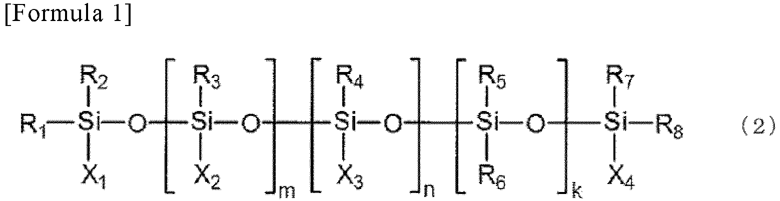

Examples of the alkyl group having from 1 to 6 carbons include a methyl group, an ethyl group, an n-propyl group, an isopropyl group, a butyl group, a pentyl group, a hexyl group, and a cyclohexyl group. Examples of the aryl groups having from 6 to 12 carbons include a phenyl group, a methylphenyl group, and the like. Among these, a methyl group is preferred from the perspective of easiness of production of the polyorganosiloxane itself. Examples of the alkoxyl group having from 1 to 5 carbons include a methoxy group, an ethoxy group, a propoxy group, an isopropoxy group, and a butoxy group. Among these, from the perspective of reactivity, a methoxy group is preferred.

The aminosilane structure is not particularly limited and is preferably a structure derived from aminosilane, such as N-β-(aminoethyl)-γ-aminopropylmethyldimethoxysilane, N-γ-(aminoethyl)-γ-aminopropyltrimethoxysilane, N-β-(aminoethyl)-γ-aminopropyltriethoxy silane, γ-aminopropyltrimethoxysilane, γ-aminopropyltriethoxysilane, and N-phenyl-γ-aminopropyltrimethoxysilane.

The terminal-modified styrene-butadiene rubber has a vinyl content of from 9 to 45 mol%. When the vinyl content is less than 9 mol%, an effect of enhancing dispersibility of the silica cannot be adequately achieved, and the temperature dependency of low rolling resistance cannot be reduced. Furthermore, when the vinyl content is more than 45 mol%, wear resistance deteriorates. The vinyl content is preferably from 20 to 45 mol%, more preferably from 25 to 45 mol%, and even more preferably from 28 to 42 mol%. The vinyl content of the terminal-modified styrene-butadiene rubber can be measured by ¹H-NMR.

The styrene content of the terminal-modified styrene-butadiene rubber is not particularly limited and is preferably from 5 to 30 mass%, and more preferably from 8 to 25 mass%. The styrene content in this range is preferred because low rolling resistance can be achieved. The styrene content of the terminal-modified styrene-butadiene rubber can be measured by ¹H-NMR.

The glass transition temperature of the terminal-modified styrene-butadiene rubber is -45°C or lower. When the glass transition temperature is higher than -45°C, the temperature dependency of low rolling resistance cannot be reduced. The glass transition temperature is preferably from -45°C to -65°C, and more preferably from -45°C to -60°C. For the glass transition temperature of the terminal-modified styrene-butadiene rubber, differential scanning calorimetry (DSC) is performed at a rate of temperature increase of 20°C/minute to obtain a thermogram, and the temperature at the midpoint of the transition region is defined as the glass transition temperature.

The rubber composition for a tire may contain a natural rubber as the diene rubber. Blending of the natural rubber can reduce the temperature dependency of low rolling resistance. The amount of the natural rubber is preferably from 10 to 30 mass%, and more preferably from 15 to 25 mass%, in 100 mass% of the diene rubber. As the natural rubber, a natural rubber that is ordinarily used in a rubber composition for a tire is preferably used.

The rubber composition for a tire may contain another diene rubber besides the terminal-modified styrene-butadiene rubber and the natural rubber. Examples of such other diene rubber include a modified styrene-butadiene rubber other than the specific terminal-modified styrene-butadiene rubber described above, an unmodified styrene-butadiene rubber, a butadiene rubber, an isoprene rubber, a butyl rubber, a halogenated butyl rubber, and an acrylonitrile-butadiene rubber. Other diene rubber may be used alone or as a discretionary blend. The content of such other diene rubber is preferably from 0 to 20 mass%, and more preferably from 0 to 15 mass%, in 100 mass% of the diene rubber.

The rubber composition for a tire contains from 60 to 130 parts by mass of silica in 100 parts by mass of the diene rubber. Blending the silica results in excellent wet performance and low rolling resistance. When the amount of the silica is less than 60 parts by mass, wet performance becomes unsatisfactory. When the amount of the silica is more than 130 parts by mass, low rolling resistance deteriorates. The blended amount of the silica is preferably from 70 to 130 parts by mass. As the silica, silica ordinarily used in a rubber composition for a tire is preferably used. For example, wet silica, dry silica, carbon-silica in which silica is carried on a carbon black surface (dual-phase filler), and silica that is surface-treated with a compound having reactivity or miscibility with both silica and rubber, such as a silane coupling agent or polysiloxane, can be used. Among these, a wet silica having hydrous silicic acid as a main component is preferred.

Furthermore, blending a silane coupling agent together with the silica is preferred because dispersibility of the silica is improved and wet performance and low rolling resistance are further improved. The blended amount of the silane coupling agent is from 2 to 20 mass%, and preferably from 5 to 15 mass%, with respect to the mass of the silica. When the blended amount of the silane coupling agent is less than 2 mass% of the silica mass, effect of improving the dispersibility of the silica cannot be adequately achieved. Furthermore, when the blended amount of the silane coupling agent is more than 20 mass%, the diene rubber component tends to be gelled, and thus the desired effect cannot be achieved.

The silane coupling agent is not particularly limited and is preferably a sulfur-containing silane coupling agent. Examples thereof include a mercapto silane compound such as bis-(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-mercaptopropyltrimethoxysilane, 3-mercaptopropyldimethoxymethylsilane, 3-mercaptopropyldimethylmethoxysilane, 2-mercaptoethyltriethoxysilane, 3-mercaptopropyltriethoxysilane, VP Si363 available from Evonik Industries, and a mercapto silane compound described in JP 2006-249069 A; 3-trimethoxysilylpropylbenzothiazole tetrasulfide, 3-triethoxysilylpropylbenzothiazolyl tetrasulfide, 3-triethoxysilylpropylmethacrylate monosulfide, 3-trimethoxysilylpropylmethacrylate monosulfide, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, bis(3-diethoxymethylsilylpropyl) tetrasulfide, dimethoxymethylsilylpropyl-N,N-dimethylthiocarbamoyl tetrasulfide, dimethoxymethylsilylpropylbenzothiazolyl tetrasulfide, 3-octanoylthiopropyltriethoxysilane, 3-propionylthiopropyltrimethoxysilane, vinyltrimethoxysilane, vinyltriethoxysilane, vinyl tris(2-methoxyethoxy)silane, 3-glycidoxypropyltrimethoxysilane, 3-glycidoxypropylmethyldimethoxysilane, β-(3,4-epoxycyclohexyl)ethyltrimethoxysilane, 3-aminopropyltrimethoxysilane, N-(β-aminoethyl)-γ-aminopropyltrimethoxysilane, and N-(β-aminoethyl)-γ-aminopropylmethyldimethoxysilane.

Furthermore, as the silane coupling agent, a silane coupling agent represented by an average compositional formula of Formula (1) below is more preferred.

(A)ₐ(B)_{b}(C)_{c}(D)_{d}(R1)ₑSiO_{(4-2a-b-c-d-e)/2} ... (1)

In Formula (1), A represents a divalent organic group containing a sulfide group, B represents a monovalent hydrocarbon group having from 5 to 10 carbons, C represents a hydrolyzable group, D represents an organic group containing a mercapto group, R1 represents a monovalent hydrocarbon group having from 1 to 4 carbons, and a to e satisfy the relationships: 0 ≤ a < 1, 0 < b < 1, 0 < c < 3, 0 < d < 1, 0 < e < 2, and 0 < 2a + b + c + d + e < 4.

The silane coupling agent represented by Formula (1) above preferably includes a polysiloxane backbone. The polysiloxane backbone may be a straight-chain, branched, or three-dimensional structure, or a combination of these.

In Formula (1) above, the hydrocarbon group B is a monovalent hydrocarbon group having from 5 to 10 carbons, preferably a monovalent hydrocarbon group having from 6 to 10 carbons, and more preferably a monovalent hydrocarbon group having from 8 to 10 carbons. Examples thereof include a hexyl group, an octyl group, and a decyl group. In this way, the mercapto group is protected, Mooney scorch time is made longer, superior processability (scorch resistance) is achieved, and even better low rolling resistance can be achieved. The subscript b of the hydrocarbon group B is more than 0 and preferably satisfies 0.10 ≤ b ≤ 0.89.

Furthermore, in Formula (1) above, the organic group A represents a divalent organic group containing a sulfide group (hereinafter, also referred to as "sulfide group-containing organic group"). When the sulfide group-containing organic group is contained, even better low heat build-up and processability (especially sustenance and prolongation of Mooney scorch time) are achieved. Thus, the subscript a of the sulfide group-containing organic group A is preferably more than 0, and more preferably satisfies 0 < a ≤ 0.50. The sulfide group-containing organic group A may contain a heteroatom such as an oxygen atom, a nitrogen atom, or a sulfur atom.

Among these, the sulfide group-containing organic group A is preferably a group represented by Formula (3) below.

*-(CH₂)ₙ-Sx-(CH₂)ₙ-* ... (3)

In Formula (3) above, n represents an integer of 1 to 10, x represents an integer of 1 to 6, and * represents a bonding position.

Specific examples of the sulfide group-containing organic group A represented by General formula (3) above include *-CH₂-S₂-CH₂-*, *-C₂H₄-S₂-C₂H₄-*, *-C₃H₆-S₂-C₃H₆-*, *-C₄H₈-S₂-C₄H₈-*, *-CH₂-S₄-CH₂-*, *-C₂H₄-S₄-C₂H₄-*, *-C₃H₆-S₄-C₃H₆-*, and *-C₄H₈-S₄-C₄H₈-*.

The silane coupling agent containing the polysiloxane represented by the average compositional formula of General formula (1) above has excellent affinity and/or reactivity with silica due to having a hydrolyzable group C. The subscript c of the hydrolyzable group C in General formula (1) preferably satisfies 1.2 ≤ c ≤ 2.0 because even better low heat build-up and processability (scorch resistance) are achieved and even better dispersibility of the silica is achieved. Specific examples of the hydrolyzable group include an alkoxy group, a phenoxy group, a carboxyl group, an alkenyloxy group, and the like. From the perspective of achieving good dispersibility of silica and even better processability (scorch resistance), the hydrolyzable group C is preferably a group represented by General formula (4) below.

*-OR² ... (4)

In General formula (4) above, * represents a bonding position. Furthermore, R² represents an alkyl group having from 1 to 20 carbons, an aryl group having from 6 to 10 carbons, an aralkyl group (aryl-alkyl group) having from 6 to 10 carbons, or an alkenyl group having from 2 to 10 carbons. Among these, an alkyl group having from 1 to 5 carbons is preferred.

Specific examples of the alkyl group having from 1 to 20 carbons include a methyl group, an ethyl group, a propyl group, a butyl group, a hexyl group, an octyl group, a decyl group, and an octadecyl group. Specific examples of the aryl group having from 6 to 10 carbons include a phenyl group, and a tolyl group. Specific examples of the aralkyl group having from 6 to 10 carbons include a benzyl group, and a phenylethyl group. Specific examples of the above alkenyl group having from 2 to 10 carbons include a vinyl group, a propenyl group, a pentenyl group, and the like.

Since the silane coupling agent containing polysiloxane represented by the average compositional formula represented by General formula (1) above has an organic group D containing a mercapto group, the silane coupling agent can interact and/or react with the diene rubber, and thus excellent low heat build-up is achieved. The subscript d of the organic group D containing a mercapto group preferably satisfies 0.1 ≤ d ≤ 0.8. From the perspective of achieving good dispersibility of silica and even better processability (scorch resistance), the organic group D containing a mercapto group is preferably a group represented by General formula (5) below.

*-(CH₂)ₘ-SH ... (5)

In General formula (5) above, m represents an integer of from 1 to 10, and particularly preferably an integer of from 1 to 5. In the formula, * represents a bonding position.

Specific examples of the group represented by General formula (5) above include *-CH₂SH, *-C₂H₄SH, *-C₃H₆SH, *-C₄H₈SH, *-C₅H₁₀SH, *-C₆H₁₂SH, *-C₇H₁₄SH, *-C₈H₁₆SH, *-C₉H₁₈SH, and *-C₁₀H₂₀SH.

In General formula (1) above, R¹ represents a monovalent hydrocarbon group having from 1 to 4 carbons. Examples of the hydrocarbon group R¹ include a methyl group, an ethyl group, a propyl group, and a butyl group.

By blending another inorganic filler besides the silica in the rubber composition for a tire, the strength of the rubber composition can be made high, and tire durability can be ensured. Examples of other inorganic filler include an inorganic filler such as carbon black, clay, aluminum hydroxide, calcium carbonate, mica, talc, aluminum hydroxide, aluminum oxide, titanium oxide, and barium sulfate; and an organic filler such as cellulose, lecithin, lignin, and dendrimer.

In particular, by blending the carbon black, excellent strength of the rubber composition can be achieved. As the carbon black, a carbon black such as furnace black, acetylene black, thermal black, channel black, and graphite can be blended. Of these, furnace black is preferred. Specific examples thereof include SAF, ISAF, ISAF-HS, ISAF-LS, IISAF-HS, HAF, HAF-HS, HAF-LS, and FEF. One type of these carbon blacks may be used alone, or a combination of two or more types of these carbon blacks may be used. Furthermore, surface-treated carbon blacks, in which these carbon blacks are chemically modified with various acid compounds, can also be used.

When the rubber composition for a tire contains a thermoplastic resin, the temperature dependency of dynamic visco-elasticity can be adjusted. From 10 to 50 parts by mass, preferably from 15 to 45 parts by mass, and more preferably from 20 to 40 parts by mass, of the thermoplastic resin is blended per 100 parts by mass of the diene rubber. When the blended amount of the thermoplastic resin is less than 10 parts by mass, wet performance deteriorates. When the blended amount of the thermoplastic resin is more than 50 parts by mass, steering stability deteriorates.

The type of the thermoplastic resin is not particularly limited, and examples thereof include natural resins such as terpene resins and rosin resins; synthetic resins such as petroleum resins, carboniferous resins, phenol resins, and xylene resins; and modified products thereof. Among these, terpene resins and/or petroleum resins are preferable and modified products of terpene resins are more preferable.

Preferably, examples of the terpene resins include α-pinene resin, β-pinene resin, limonene resin, hydrogenated limonene resin, dipentene resin, terpene phenol resin, terpene styrene resin, aromatic modified terpene resin, hydrogenated terpene resin, and the like. Among these, aromatic modified terpene resins are preferable, and examples thereof include aromatic modified terpene resins obtained by polymerizing a terpene such as α-pinene, β-pinene, dipentene, limonene, and the like, and an aromatic compound such as styrene, phenol, α-methylstyrene, vinyl toluene, and the like.

Examples of the petroleum resin include aromatic hydrocarbon resins or, alternatively, saturated or unsaturated aliphatic hydrocarbon resins. Examples thereof include C5 petroleum resins (aliphatic petroleum resins formed by polymerizing fractions such as isoprene, 1,3-pentadiene, cyclopentadiene, methylbutene, pentene, and the like), C9 petroleum resins (aromatic petroleum resins formed by polymerizing fractions such as α-methylstyrene, o-vinyl toluene, m-vinyl toluene, p-vinyl toluene, and the like), C5C9 copolymerization petroleum resins, and the like.

The rubber composition for a tire according to an embodiment of the present invention contains a terpene resin as the thermoplastic resin, and the mass ratio of the terpene resin in the thermoplastic resin is preferably 1/3 or more. When the mass ratio of the terpene resin is 1/3 or more, miscibility with the diene rubber can be adjusted, good wet performance and low rolling resistance can be achieved, and the temperature dependency of low rolling resistance can be further reduced. The mass ratio of the terpene resin is more preferably from 1/3 to 1/1, and even more preferably from 1/2 to 1/1.

In addition to the components described above, the rubber composition for a tire may also contain various compounding agents that are commonly used in rubber compositions for tire treads, in accordance with an ordinary method. Examples thereof include a vulcanization or crosslinking agent, a vulcanization accelerator, an anti-aging agent, a processing aid, a plasticizer, a liquid polymer, a thermosetting resin, and a thermoplastic resin. These compounding agents can be kneaded by a common method to obtain a rubber composition that can then be used for vulcanization or crosslinking. These compounding agents can be compounded in conventional general amounts so long as the objects of the present invention are not hindered. The rubber composition for a tire can be prepared by mixing the above-mentioned components using a known rubber kneading machine such as a Banbury mixer, a kneader, or a roller.

The rubber composition for a tire is suitable for forming a tread portion or a side portion of a summer tire and especially suitable for forming a tread portion of a summer tire. The summer tire obtained by this has excellent steering stability, wear resistance, and wet performance and can improve low rolling resistance in a wide temperature range beyond conventional levels.

Embodiments according to the present invention are further described below by Examples. However, the scope of the present invention is not limited to these Examples.

### Examples

For preparing 21 types of rubber compositions for tires (Standard Example 1, Examples 1 to 12, and Comparative Examples 1 to 8) containing the common additive formulation listed in Table 3 and having the blend listed in Tables 1 and 2, components other than sulfur and vulcanization accelerators were weighed and kneaded in a 1.7 L sealed Banbury mixer for 5 minutes. Then, a master batch was discharged outside the mixer and cooled at room temperature. The master batch was placed in the Banbury mixer, and a sulfur and vulcanization accelerators were then added and mixed to obtain each of the rubber compositions for the tires. Note that, for the oil-extended SBR-1 and SBR-2, the total blended amount is listed in the upper row, and the net blended amount of SBR except the oil-extending component is listed in parentheses in the lower row. Furthermore, the additive formulation in Table 3 is expressed as values in part by mass per 100 parts by mass of the diene rubbers listed in Tables 1 and 2.

The rubber composition for a tire obtained as described above was vulcanized at 160°C for 20 minutes in a mold having a predetermined form, and thus an evaluation sample was produced. Using the obtained evaluation sample, rubber hardness at 23°C, wear resistance, and dynamic visco-elasticity (loss tangent tan δ) were measured by the following methods.

### Rubber Hardness at 23°C (Steering Stability)

Using the evaluation sample of the obtained rubber composition for a tire, rubber hardness at a temperature of 23°C was measured by a type A durometer in accordance with JIS K6253. The obtained result is shown in the "Steering stability" row as an index value with Standard Example 1 being assigned the value of 100. A larger index value of 99 or more indicates superior steering stability.

### Wear resistance

Using a Lambourn abrasion test machine (available from Iwamoto Seisakusho K.K.), an amount of wear of the evaluation sample of the obtained rubber composition for a tire was measured in accordance with JIS K6264 under the following conditions: a load of 15.0 kg (147.1 N) and a slip rate of 25%. Each of the obtained results was expressed as an index value obtained by calculating a reciprocal thereof, with a reciprocal of the amount of wear of Standard Example 1 being assigned the value of 100, and shown in rows of "wear resistance" in Tables 1 and 2. A larger index value of wear resistance of 102 or more indicates superior wear resistance.

### Dynamic Visco-Elasticity (Loss Tangent tan δ)

As the dynamic visco-elasticity of the evaluation sample of the obtained rubber composition for a tire, the values of tan δ (0°C), tan δ (30°C), and tan δ (60°C) were measured using a viscoelastic spectrometer available from Iwamoto Seisakusho K.K. at an elongation deformation strain of 10 ± 2%, a vibration frequency of 20 Hz, and temperatures of 0°C, 30°C, and 60°C. Furthermore, the value of [tan δ (30°C) - tan δ (60°C)] and the reciprocal of tan δ (60°C) were calculated.

The obtained tan δ (0°C) value is shown in the "Wet Performance" rows of Tables 1 and 2 as an index value with Standard Example 1 being assigned the value of 100. A larger index value of 99 or more indicates superior wet performance.

The obtained reciprocal value of tan δ (60°C) is shown in the "low rolling resistance" rows of Tables 1 and 2 as an index value with Standard Example 1 being assigned the value of 100. A larger index value of 102 or more indicates smaller rolling resistance, which is superior.

The obtained value of [tan δ (30°C) - tan δ (60°C)] is shown in the "temperature dependency of low rolling resistance" rows of Tables 1 and 2 as an index value with Standard Example 1 being assigned the value of 100. A smaller index value of 98 or less indicates smaller temperature dependency of low rolling resistance, which is superior.

**Table 1-1**

| | | Standard Example 1 | Example 1 | Example 2 |
|---|---|---|---|---|
| NR | Parts by mass | 20 | 25 | 25 |
| BR | Parts by mass | 10 | | |
| SBR-1 | Parts by mass | 96.25 (70) | | |
| SBR-2 | Parts by mass | | | |
| SBR-3 | Parts by mass | | 75 | 75 |
| SBR-5 | Parts by mass | | | |
| Silica-1 | Parts by mass | 65 | 90 | 120 |
| Silica-2 | Parts by mass | | | |
| Carbon black | Parts by mass | 15 | 5 | 5 |
| Coupling agent-1 | Parts by mass | 5.2 | 7.2 | 9.6 |
| Resin-1 | Parts by mass | | 30 | 30 |
| Aroma oil | Parts by mass | 10 | 5 | 15 |
| Sulfur | Parts by mass | 1.5 | 1.5 | 1.5 |
| Steering stability | Index value | 100 | 100 | 106 |
| Wear resistance | Index value | 100 | 120 | 132 |
| Wet performance | Index value | 100 | 108 | 108 |
| Low rolling resistance | Index value | 100 | 112 | 104 |
| Temperature dependency of low rolling resistance | Index value | 100 | 74 | 68 |

**Table 1-2**

| | | Example 3 | Example 4 | Example 5 |
|---|---|---|---|---|
| NR | Parts by mass | 25 | | 25 |
| BR | Parts by mass | | 15 | |
| SBR-1 | Parts by mass | | | |
| SBR-2 | Parts by mass | 18.75 (15) | 31.25 (25) | |
| SBR-3 | Parts by mass | 60 | 60 | 75 |
| SBR-5 | Parts by mass | | | |
| Silica-1 | Parts by mass | 90 | 90 | |
| Silica-2 | Parts by mass | | | 90 |
| Carbon black | Parts by mass | 5 | 5 | 5 |
| Coupling agent-1 | Parts by mass | 7.2 | 7.2 | 7.2 |
| Resin-1 | Parts by mass | 20 | 20 | 30 |
| Aroma oil | Parts by mass | 10 | 10 | 5 |
| Sulfur | Parts by mass | 1.5 | 1.5 | 1.5 |
| Steering stability | Index value | 100 | 100 | 104 |
| Wear resistance | Index value | 108 | 108 | 128 |
| Wet performance | Index value | 110 | 106 | 113 |
| Low rolling resistance | Index value | 112 | 107 | 108 |
| Temperature dependency of low rolling resistance | Index value | 91 | 93 | 77 |

**Table 1-3**

| | | Example 6 | Example 7 | Example 8 | Example 9 |
|---|---|---|---|---|---|
| NR | Parts by mass | 25 | 35 | 25 | 25 |
| BR | Parts by mass | | | | |
| SBR-1 | Parts by mass | | | | |
| SBR-2 | Parts by mass | | | | |
| SBR-3 | Parts by mass | 75 | 65 | | |
| SBR-5 | Parts by mass | | | 75 | 75 |
| Silica-1 | Parts by mass | | 90 | 90 | 120 |
| Silica-2 | Parts by mass | 120 | | | |
| Carbon black | Parts by mass | 5 | 5 | 5 | 5 |
| Coupling agent-1 | Parts by mass | 9.6 | 7.2 | 7.2 | 9.6 |
| Resin-1 | Parts by mass | 30 | 30 | 30 | 30 |
| Aroma oil | Parts by mass | 15 | 10 | 5 | 15 |
| Sulfur | Parts by mass | 1.5 | 1.5 | 1.5 | 1.5 |
| Steering stability | Index value | 106 | 100 | 100 | 106 |
| Wear resistance | Index value | 140 | 110 | 120 | 132 |
| Wet performance | Index value | 122 | 108 | 110 | 110 |
| Low rolling resistance | Index value | 102 | 106 | 114 | 108 |
| Temperature dependency of low rolling resistance | Index value | 89 | 92 | 76 | 70 |

**Table 2-1**

| | | Comparative Example 1 | Comparative Example 2 | Comparative Example 3 | Comparative Example 4 | Comparative Example 5 |
|---|---|---|---|---|---|---|
| NR | Parts by mass | 25 | 25 | 25 | 25 | 25 |
| SBR-2 | Parts by mass | 37.5 | | | | |
| | | -30 | | | | |
| SBR-3 | Parts by mass | 45 | 75 | 75 | | |
| SBR-4 | Parts by mass | | | | 75 | |
| SBR-6 | Parts by mass | | | | | 75 |
| SBR-7 | Parts by mass | | | | | |
| Silica-1 | Parts by mass | 90 | 140 | 55 | 90 | 90 |
| Silica-2 | Parts by mass | | | | | |
| Carbon black | Parts by mass | 5 | 5 | 5 | 5 | 5 |
| Coupling agent-1 | Parts by mass | 7.2 | 11.2 | 4.4 | 7.2 | 7.2 |
| Coupling agent-2 | Parts by mass | | | | | |
| Resin-1 | Parts by mass | 10 | 30 | 30 | 30 | 30 |
| Resin-2 | Parts by mass | | | | | |
| Aroma oil | Parts by mass | 15 | 35 | 5 | 5 | 5 |
| Sulfur | Parts by mass | 1.5 | 1.5 | 1.5 | 1.5 | 1.5 |
| Steering stability | Index value | 100 | 110 | 104 | 104 | 100 |
| Wear resistance | Index value | 95 | 110 | 108 | 108 | 78 |
| Wet performance | Index value | 114 | 112 | 98 | 97 | 128 |
| Low rolling resistance | Index value | 110 | 96 | 118 | 97 | 92 |
| Temperature dependency of low rolling resistance | Index value | 111 | 71 | 81 | 78 | 100 |

**Table 2-2**

| | | Comparative Example 6 | Comparative Example 7 | Comparative Example 8 | Example 10 | Example 11 | Example 12 |
|---|---|---|---|---|---|---|---|
| NR | Parts by mass | 25 | 25 | 25 | 25 | 25 | 25 |
| SBR-2 | Parts by mass | | 18.75 | | | | |
| | | | -15 | | | | |
| SBR-3 | Parts by mass | | 60 | 75 | 75 | 75 | 75 |
| SBR-4 | Parts by mass | | | | | | |
| SBR-6 | Parts by mass | | | | | | |
| SBR-7 | Parts by mass | 75 | | | | | |
| Silica-1 | Parts by mass | 90 | 90 | 90 | | | 90 |
| Silica-2 | Parts by mass | | | | 90 | 120 | |
| Carbon black | Parts by mass | 5 | 5 | 5 | 5 | 5 | 5 |
| Coupling agent-1 | Parts by mass | 7.2 | 7.2 | 7.2 | | | 7.2 |
| Coupling agent-2 | Parts by mass | | | | 10.8 | 14.4 | |
| Resin-1 | Parts by mass | 30 | | 60 | 30 | 30 | 10 |
| Resin-2 | Parts by mass | | | | | | 20 |
| Aroma oil | Parts by mass | 5 | 20 | | 5 | | 5 |
| Sulfur | Parts by mass | 1.5 | 1.5 | 1.8 | 1.8 | 1.8 | 1.8 |
| Steering stability | Index value | 100 | 100 | 92 | 100 | 105 | 100 |
| Wear resistance | Index value | 125 | 118 | 105 | 113 | 116 | 124 |
| Wet performance | Index value | 96 | 89 | 118 | 120 | 131 | 108 |
| Low rolling resistance | Index value | 96 | 116 | 103 | 116 | 108 | 106 |
| Temperature dependency of low rolling resistance | Index value | 76 | 81 | 93 | 71 | 76 | 82 |

Types of raw materials used as indicated in Tables 1 and 2 are described below.
- NR: Natural rubber, SIR20, available from PT. NUSIRA
- BR: Butadiene rubber, Nipol BR1220, available from Zeon Corporation
- SBR-1: Unmodified styrene-butadiene rubber; NS522, available from Zeon Corporation; vinyl content: 42 mol%; glass transition temperature: -27°C; oil extended product containing 37.5 parts by mass of oil component per 100 parts by mass of SBR
- SBR-2: Terminal-modified styrene-butadiene rubber having an aminosilane structure; Tufdene F3420, available from Asahi Kasei Corporation; vinyl content: 41 mol%; glass transition temperature: -27°C; oil extended product containing 25 parts by mass of oil component per 100 parts by mass of SBR
- SBR-3: Terminal-modified styrene-butadiene rubber having a polyorganosiloxane structure; NS612, available from Zeon Corporation; vinyl content: 31 mol%; glass transition temperature: -60°C; not oil-extended
- SBR-4: Unmodified styrene-butadiene rubber, Tufdene 1000R, available from Asahi Kasei Corporation; vinyl content: 9 mol%; glass transition temperature: -73°C; not oil-extended
- SBR-5: Terminal-modified styrene-butadiene rubber having an aminosilane structure; HPR840, available from JSR Corporation; vinyl content: 21 mol%; glass transition temperature: -60°C; not oil-extended
- SBR-6: Terminal-modified styrene-butadiene rubber having a polyorganosiloxane structure; NS616, available from Zeon Corporation; vinyl content: 67 mol%; glass transition temperature: -25°C; not oil-extended
- SBR-7: Terminal-modified styrene-butadiene rubber having an N-methylpyrrolidone structure; polymerization product obtained in laboratory; vinyl content: 31 mol%; glass transition temperature: -60°C; not oil-extended
- Silica-1: Zeosil 1165MP, available from Solvay
- Silica-2: Zeosil 200MP, available from Solvay
- Carbon black: Show Black N234, available from Cabot Japan K.K.
- Coupling agent-1: Silane coupling agent, Si69, available from Evonik Degussa
- Coupling agent-2: Silane coupling agent containing polysiloxane represented by average compositional formula of General formula (1), 9511D, available from Shin-Etsu Chemical Co., Ltd.; polysiloxane represented by average compositional formula (-C₃H₆-S₄-C₃H₆-)_{0.071}(-C₈H₁₇)_{0.571}(-OC₂H₅)_{1.50}(-C₃H₆SH)_{0.286}SiO_{0.75}
- Resin-1: Aromatic modified terpene resin; YS Resin TO-125, available from Yasuhara Chemical Co., Ltd.
- Resin-2: Petroleum resin, Quintone A100, available from Zeon Corporation
- Oil: Extract 4S, available from Shell Lubricants Japan K.K.
- Sulfur: Oil treated sulfur, available from Hosoi Chemical Industry Co., Ltd.

**Table 3**

| Common additive formulation | | |
|---|---|---|
| Anti-aging agent | 3 | Parts by mass |
| Stearic acid | 2 | Parts by mass |
| Zinc oxide | 3 | Parts by mass |
| Vulcanization accelerator-1 | 1.7 | Parts by mass |
| Vulcanization accelerator-2 | 2 | Parts by mass |

Types of raw materials used as indicated in Table 3 are described below.
- Anti-aging agent: 6PPD, available from Korea Kumho Petrochemical
- Stearic acid: beads stearic acid, available from NOF Corporation
- Zinc oxide: Zinc Oxide III, available from Seido Chemical Industry Co., Ltd.
- Vulcanization accelerator-1: NOCCELER CZ-G, available from Ouchi Shinko Chemical Industrial Co., Ltd.
- Vulcanization accelerator-2: Soxinol D-G, available from Sumitomo Chemical Co., Ltd.

As can be seen from Tables 1 and 2, it was confirmed that the rubber composition for a tire of each of Examples 1 to 12 achieved excellent steering stability, wear resistance, wet performance, and low rolling resistance and reduced the temperature dependency of satisfactory low rolling resistance.

The rubber composition for a tire of Comparative Example 1 exhibited low wear resistance and could not reduce the temperature dependency of low rolling resistance because the content of the terminal-modified styrene-butadiene rubber was less than 55 mass%.

With the rubber composition for a tire of Comparative Example 2, because the blended amount of the silica was more than 130 parts by mass, the rolling resistance became large.

With the rubber composition for a tire of Comparative Example 3, because the blended amount of the silica was less than 60 parts by mass, the wet performance deteriorated.

Because the rubber composition for a tire of Comparative Example 4 contained an unmodified styrene-butadiene rubber having a low glass transition temperature (SBR-4) but did not contain the specific terminal-modified styrene-butadiene rubber, the wet performance and the low rolling resistance could not be enhanced.

With the rubber composition for a tire of Comparative Example 5, because the glass transition temperature of the terminal-modified styrene-butadiene rubber (SBR-6) was higher than -45°C, the wear resistance and the low rolling resistance were poor.

With the rubber composition for a tire of Comparative Example 6, because the modification group of the terminal-modified styrene-butadiene rubber (SBR-7) did not contain the polyorganosiloxane structure and the aminosilane structure, the wet performance and the low rolling resistance were poor.

Because the rubber composition for a tire of Comparative Example 7 did not contain the thermoplastic resin, the wet performance was poor.

Because the rubber composition for a tire of Comparative Example 8 contained more than 50 parts by mass of the thermoplastic resin, the steering stability was poor.

## Claims

1. A rubber composition for a tire, the rubber composition comprising:
in 100 parts by mass of a diene rubber containing 55 mass% or more of a terminal-modified styrene-butadiene rubber,
from 60 to 130 parts by mass of silica,
from 10 to 50 parts by mass of a thermoplastic resin, and
from 2 to 20 mass% of a silane coupling agent with respect to the mass of the silica,
the terminal-modified styrene-butadiene rubber having a vinyl content of from 9 to 45 mol% and a glass transition temperature of -45°C or lower, and containing a polyorganosiloxane structure or an aminosilane structure at a terminal.

2. The rubber composition for a tire according to claim 1, wherein the rubber composition contains from 10 to 30 mass% of a natural rubber in 100 mass% of the diene rubber.

3. The rubber composition for a tire according to claim 1 or 2, wherein the thermoplastic resin contains a terpene resin, and a mass ratio of the terpene resin in the thermoplastic resin is 1/3 or more.

4. The rubber composition for a tire according to any one of claims 1 to 3, wherein the silane coupling agent is represented by an average compositional formula of Formula (1):
(A)ₐ(B)_{b}(C)_{c}(D)_{d}(R1)ₑSiO_{(4-2a-b-c-d-e)/2} ... (1)
where A represents a divalent organic group containing a sulfide group, B represents a monovalent hydrocarbon group having from 5 to 10 carbons, C represents a hydrolyzable group, D represents an organic group containing a mercapto group, R1 represents a monovalent hydrocarbon group having from 1 to 4 carbons, and a to e satisfy the relationships: 0 ≤ a < 1, 0 < b < 1, 0 < c < 3, 0< d < 1, 0 ≤ e < 2, and 0 < 2a + b + c + d + e < 4.

5. A tire comprising a tread portion containing the rubber composition for a tire according to any one of claims 1 to 4.
